# EUROPÄISCHE PATENTANMELDUNG

(11) **EP 0 718 535 A2**
(43) Veröffentlichungstag der Anmeldung: **26.06.1996**
(21) Anmeldenummer: 95120121.9
(22) Anmeldetag: 19.12.1995
(51) Int. Cl.: F16L 9/12, F16L 1/00, B67D 5/04

(54) **Schlauch zur Betankung von Kraftfahrzeugen**

(30) Priorität: 22.12.1994 DE 4445901
(71) Anmelder: Continental Aktiengesellschaft, D-30165 Hannover (DE)
(72) Erfinder: Emde, Willi, D-34516 Vöhl-Basdorf (DE); Gast, Heinrich, D-63636 Brachttal (DE); Wallmeier, Gerhard, D-34431 Marsberg-Giershagen (DE)

(57) **Zusammenfassung**

Die Erfindung betrifft einen Schlauch zur Betankung von Kraftfahrzeugen, der in üblicher Weise aus flexiblen polymeren Werkstoffen unter Einfügung einer Verstärkungsschicht gebildet ist und sich dadurch auszeichnet, daß er an seiner Innenseite mindestens einen nach innen gerichteten, sich über die gesamte Schlauchlänge erstreckenden Wulst aufweist, in den ein an den beiden Stirnenden des Schlauches mündender Kanal eingeformt ist. Vorzugsweise bildet ein derartiger Schlauch das in den Tankstutzen eines Kraftfahrzeuges einführbare Mündungsteil der Zapfpistole einer Betankungsanlage.

## Beschreibung

Die Erfindung betrifft einen Schlauch zur Betankung von Kraftfahrzeugen gemäß dem Oberbegriff des Patentanspruchs 1. Derartige Schläuche werden in großer Zahl und unterschiedlichen Ausführungsformen an den Zapfsäulen von Betankungsanlagen eingesetzt. Um zu vermeiden, daß Bestandteile der in ihnen geförderten Kraftstoffe in die Atmosphäre gelangen, weisen sie eine für diese Bestandteile undurchlässige Wandung auf, und ferner sind sie zunehmend als Doppel- bzw. Mehrfach-Schläuche ausgebildet, wobei ein Hauptschlauch zur Förderung des Kraftstoffes dient und durch mindestens einen Nebenschlauch in Gegenrichtung schädliche Kraftstoffdämpfe, die an der Mündung der Zapfpistole austreten würden, abgesaugt werden. Beispiele für derartige Mehrfach-Schlauchverbindungen sind aus den Dokumenten DE-OS 22 62 109, DE-OS 36 13 453 und US-PS 41 22 968 bekannt.

Da diese bekannten Schlauchverbindungen teils in der Handhabung umständlich und unbequem, teils bei der Herstellung und Montage aufwendig und kompliziert waren, stellte sich die Aufgabe, einen im Rahmen von Betankungsanlagen für Kraftfahrzeuge universell einsetzbaren Schlauch zu schaffen, der rationell herstellbar sowie bezüglich aller Forderungen im Hinblick auf Handhabung, Funktion und Umweltschonung optimiert ist. Diese Aufgabe wird erfindungsgemäß durch einen Schlauch der eingangs genannten Art gelöst, der die im kennzeichnenden Teil des Patentanspruchs 1 genannten Merkmale aufweist. In den Unteransprüchen sind bevorzugte Ausführungsformen bzw. Ausgestaltungen der Erfindung angegeben.

Der erfindungsgemäße Schlauch kann mittels üblicher Fertigungsmethoden und -vorrichtungen hergestellt werden, wobei die Extrusion der Schlauchinnenschicht auf einen Hauptdorn erfolgt, der eine dem erfindungsgemäßen, in das Schlauchinnere gerichteten Wulst entsprechende Längsnut aufweist und dem im Bereich der Nut ein kleinkalibriger zweiter Dorn zugeordnet ist, durch den der zusätzliche Kanal geformt wird. Selbstverständlich ist es im Rahmen der Erfindung auch möglich, sowohl die Innenschicht als auch die Verstärkungsschicht und/oder die Außenschicht der Schlauchwandung jeweils mehrschichtig aufzubauen.

Durch die vorgeschlagene konstruktive Ausbildung des Schlauches enthält dieser von vornherein zwei oder mehr voneinander unabhängige Förderkanäle, ohne daß nachträglich zusätzliche separate Schläuche an den Hauptschlauch angefügt oder in diesen eingesetzt werden müssen. Dadurch daß der zusätzliche Förderkanal vollständig in eine wulstartige Verdickung der Schlauchinnenschicht integriert ist, wird der Förderquerschnitt des Hauptschlauches nur unwesentlich verringert, und es entfällt jegliche nachträgliche Montage zusätzlicher Förderkanäle innerhalb oder außerhalb des Hauptschlauches. Die bevorzugte Anordnung des zusätzlichen Förderkanals parallel zur Längsachse des Hauptschlauches ergibt in Strömungsrichtung völlig glatte Wandungsflächen, so daß der Strömungswiderstand minimiert und Turbulenzen in der Strömung vermieden werden. Als besonders vorteilhaft hat sich erwiesen, daß der erfindungsgemäß in die Schlauchwandung integrierte zusätzliche Förderkanal den Schlauch kaum versteift, so daß die Flexibilität des Schlauches insgesamt praktisch nicht beeinträchtigt wird.

In einer besonders vorteilhaften Ausgestaltung der Erfindung bildet der vorgeschlagene Schlauch das in den Tankstutzen des zu betankenden Fahrzeuges einführbare Mündungsteil einer Betankungsanlage, wobei entweder der gesamte Betankungsschlauch einschließlich des Mündungsteils erfindungsgemäß ausgebildet sein kann oder nur der üblicherweise als metallisches Rohr ausgeführte sogenannte Rüssel herkömmlicher Zapfpistolen durch einen Schlauchabschnitt gemäß der vorliegenden Erfindung ersetzt ist. Mit einem derart mit einem flexiblen Mündungsteil versehenen Betankungsschlauch kann mit Sicherheit vermieden werden, daß bei ungenauer bzw. nicht sorgfältiger Einführung des Füllrüssels in den Tankeinfüllstutzen des Kraftfahrzeugs - beispielsweise bei automatischer Betankung - die Lackierung der Kraftfahrzeugkarosserie im Bereich des Tankeinfüllstutzens durch harte Metallteile zerkratzt oder sogar ernsthaft beschädigt wird.

Bei den letztgenannten Ausführungsformen der Erfindung dient der Hauptkanal des Betankungsschlauches der Kraftstoffförderung, während der in die wulstförmige Verdickung der Schlauchinnenwandung eingeformte zweite Kanal für die Absaugung von Kraftstoffdämpfen oder als Unterdruckleitung zur Betätigung des Schließmechanismus des Zapfventils zur Verfügung steht.

Die beigefügte Zeichnung verdeutlicht den Erfindungsgegenstand anhand von schematisch dargestellten Ausführungsbeispielen, und zwar zeigen
- Fig. 1: eine perspektivische Ansicht eines erfindungsgemäßen Schlauchabschnittes und
- Fig. 2: eine mit einem erfindungsgemäßen Schlauch bzw. Schlauchmündungsteil ausgestattete Betankungsanlage.

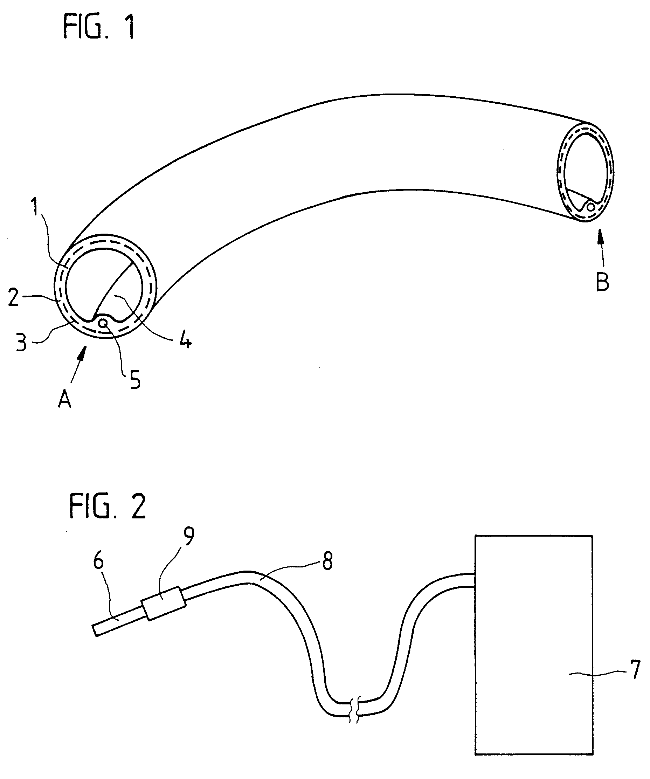

Der in Fig. 1 wiedergegebene erfindungsgemäße Schlauchabschnitt besitzt in üblicher Weise eine für Kraftstoffe und deren Dämpfe weitgehend undurchlässige Innenschicht 1 sowie eine gegenüber Umwelteinflüssen unempfindliche Außenschicht 2 aus flexiblen polymeren Werkstoffen, und zwischen diesen Schichten ist eine - üblicherweise aus textilen Fäden oder Fasern bestehende - Verstärkungsschicht 3 eingefügt. Erfindungsgemäß weist die Innenschicht 1 eine zur Schlauchachse parallele, durchlaufende Verdickung in Form eines Wulstes 4 auf, in den ein an den beiden Stirnenden A und B des Schlauches mündender Kanal 5 eingeformt ist.

In der Betankungsanlage gemäß Fig. 2 bildet ein Schlauch, der in Fig. 1 dargestellten Art zumindest das in den Tankstutzen eines Kraftfahrzeuges einführbare Mündungsteil 6 einer Zapfpistole 9. Auch der übrige Betankungsschlauch 8, der die Zapfpistole 9 mit der Zapfsäule 7 verbindet, kann erfindungsgemäß ausgeführt sein, wobei zur wirksamen Absaugung von Kraftstoffdämpfen eine größere Kalibrierung des zweiten Kanals 5 zweckmäßig sein kann. Es ist ohne weiteres erkennbar, daß in einer derartigen Betankungsanlage durch die Verwendung erfindungsgemäßer Schlauchabschnitte als Mündungsteil 6 sowie als Verbindungsleitung 8 zur Zapfsäule 7 einerseits die Gefahr von Lackbeschädigungen an der Kraftfahrzeugkarosserie vollständig beseitigt und andererseits durch den zusätzlichen in die Innenschicht der Schlauchwandung integrierten Kanal sowohl die übliche Unterdruckabschaltung des Zapfventils als auch die Absaugung umweltschädlicher Kraftstoffdämpfe gewährleistet ist.

## Patentansprüche

1. Schlauch zur Betankung von Kraftfahrzeugen, dessen Wandung eine Innenschicht (1) und eine Außenschicht (2) aufweist, die aus flexiblen polymeren Werkstoffen gebildet sind und zwischen denen eine Verstärkungsschicht (3) eingefügt ist,
**dadurch gekennzeichnet,**
daß die Innenschicht (1) mindestens einen nach innen gerichteten, sich über die gesamte Schlauchlänge erstreckenden Wulst (4) aufweist, in den ein an den beiden Stirnenden (A, B) des Schlauches mündender Kanal (5) eingeformt ist.

2. Schlauch nach Anspruch 1, dadurch gekennzeichnet, daß der Wulst (4) mit dem Kanal (5) zur Schlauchlängsachse parallel verläuft.

3. Schlauch nach Anspruch 1 oder 2, dadurch gekennzeichnet, daß er das in den Tankstutzen eines Kraftfahrzeuges einführbare Mündungsteil (6) des Betankungsschlauches einer Betankungsanlage (7), insbesondere das Mündungsteil (6) der Zapfpistole (9), bildet.
